(19) Europäisches Patentamt
European Patent Office
Office européen des brevets

(11) EP 2 740 756 A1

(12) EUROPEAN PATENT APPLICATION
published in accordance with Art. 153(4) EPC

(43) Date of publication:
**11.06.2014 Bulletin 2014/24**

(21) Application number: **12820507.7**

(22) Date of filing: **25.07.2012**

(51) Int Cl.:
***C08J 3/24*** *(2006.01)* ***F16F 1/36*** *(2006.01)*
***F16F 15/08*** *(2006.01)*

(86) International application number:
**PCT/JP2012/069525**

(87) International publication number:
**WO 2013/018815 (07.02.2013 Gazette 2013/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2011 JP 2011168221**

(71) Applicant: **Sumitomo Chemical Company Limited**
**Tokyo 104-8260 (JP)**

(72) Inventors:
- **UEKITA, Yasuo**
  **Osaka-shi**
  **Osaka 554-8558 (JP)**
- **IYAMA, Hironobu**
  **Osaka-shi**
  **Osaka 554-8558 (JP)**

(74) Representative: **Brunetti, Fabrizio et al**
**Cabinet Beau de Loménie**
**158, rue de l'Université**
**75340 Paris Cedex 07 (FR)**

# (54) METHOD FOR LOWERING DYNAMIC-TO-STATIC MODULUS RATIO OF VULCANIZED RUBBER

(57) A method for lowering the dynamic-to-static modulus ratio of vulcanized rubber, the method comprising a first step of kneading a rubber component, a filler and a compound represented by formula (I) or a salt thereof, a second step of kneading the kneaded mixture obtained in the first step, a sulfur component and a vulcanization accelerator, and a third step of thermally treating the kneaded mixture obtained in the second step, in formula (I), n represents an integer of 0 to 10. The compound represented by formula (I) or a salt thereof is preferably S-(3-aminopropyl)thiosulfuric acid or a salt thereof.

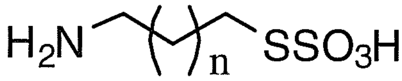
(I)

EP 2 740 756 A1

## Description

### Technical Field

The present invention relates to a method for lowering the dynamic-to-static modulus ratio of vulcanized rubber, and the like.

### Background Art

In the automotive field, importance of vibration-proof rubber is increasing recently, in view of vibration control, noise reduction, driving stability and the like. Among properties required for vibration-proof rubber, an improvement in a vibration absorbing property is particularly needed. The vibration absorbing property can be evaluated by the dynamic-to-static modulus ratio of vulcanized rubber (see, "Rubber Industry Handbook <fourth edition>", p. 848, edited by The Society of Rubber Science and Technology, Japan).

### Disclosure of the Invention

The present invention includes the following inventions.

[1] A method for lowering the dynamic-to-static modulus ratio of vulcanized rubber, the method comprising

a first step of kneading a rubber component, a filler and a compound represented by formula (I) or a salt thereof,
a second step of kneading the kneaded mixture obtained in the first step, a sulfur component and a vulcanization accelerator, and
a third step of thermally treating the kneaded mixture obtained in the second step:

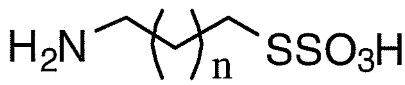 (I)

in formula (I), n represents an integer of 0 to 10.

### Modes for Carrying Out the Invention

"Dynamic-to-static modulus ratio" denotes the ratio of the spring constant at small vibration amplitude and high vibration frequency to the spring constant at large vibration amplitude and low vibration frequency, and when this value is closer to 1, the material is more desirable as vibration-proof rubber.

<First step>

In the first step, a rubber component, a filler and a compound represented by formula (I) or a salt thereof are kneaded. In the first step, it is preferable that a rubber component, a filler, a compound represented by formula (I) or a salt thereof, stearic acid and zinc oxide are kneaded.
The first step is carried out preferably at 80 to 200°C, more preferably at 110 to 180°C.
The first step is carried out preferably for 1 to 10 minutes, more preferably for 2 to 7 minutes.

<Rubber component>

The rubber component includes natural rubber, epoxidated natural rubber, deproteinized natural rubber and other modified natural rubbers, and additionally exemplified are various synthetic rubbers such as polyisoprene rubber (IR), styrene/butadiene copolymerized rubber (SBR), polybutadiene rubber (BR), acrylonitrile/butadiene copolymerized rubber (NBR), isoprene/isobutylene copolymerized rubber (IIR), ethylene/propylene/diene copolymerized rubber (EPDM) and halogenated butyl rubber (HR), and highly unsaturated rubbers such as natural rubber, styrene/butadiene copolymerized rubber and polybutadiene rubber are preferably used. Natural rubber is particularly preferable. Further, it is effective to combine several types of rubber components, such as a combination of natural rubber and styrene/butadiene copolymerized rubber and a combination of natural rubber and polybutadiene rubber.
Examples of the natural rubber include natural rubbers of grades such as RSS#1, RSS#3, TSR20 and SIR20. As the epoxidated natural rubber, those having a degree of epoxidation of 10 to 60% by mol are preferable, and ENR25

and ENR50 manufactured by kun Poulenc Guthrie Inc. are exemplified. As the deproteinized natural rubber, deproteinized natural rubbers having a total nitrogen content of 0.3% by weight or less are preferable. As the modified natural rubber, modified natural rubbers containing a polar group obtained by previously reacting 4-vinylpyridine, N,N,-dialkylaminoethyl acrylate (for example, N,N,-diethylaminoethyl acrylate), 2-hydroxy acrylate and the like with natural rubber are preferably used

Examples of SBR include emulsion polymerized SBRs and solution polymerized SBRs described in "Rubber Industry Handbook <fourth edition>", pp. 210 to 211, edited by The Society of Rubber Science and Technology, Japan. Preferably used are oil extended SBRs obtained by adding an oil such as a process oil and an aroma oil to emulsion polymerized SBRs and solution polymerized SBRs after polymerization, commercially marketed products of solution polymerized SBRs having a molecular end modified using 4,4'-bis(dialkylamino)benzophenone such as "Nipol (registered trademark) NS116" manufactured by ZEON Corporation, solution polymerized SBRs having a molecular end modified using a halogenated tin compound such as "SL574" manufactured by JSR Corporation and silane-modified solution polymerized SBRs such as "E10" and "E15" manufactured by Asahi Kasei Corporation, and solution polymerized SBRs having any of nitrogen, tin and silicon or a combination thereof at the molecular end obtained by using singly any of a lactam compound, an amide compound, a urea-based compound, an N,N-dialkylacrylamide compound, an isocyanate compound, an imide compound, a silane compound having an alkoxy group (trialkoxysilane compound and the like) and an aminosilane compound or by using two or more of the several different compounds such as a tin compound and a silane compound having an alkoxy group, and an alkylacrylamide compound and a silane compound having an alkoxy group and modifying the end thereof. Further, emulsion polymerized SBRs having a styrene content of 40% to 70% are preferably used, for the purpose of improving the hardness of vulcanized rubber.

As examples of BR, solution polymerized BRs such as high cis BRs having a cis 1,4 linkage content of 90% or more and low cis BRs having a cis linkage content of around 35% are exemplified, and high cis BRs are preferably used. Further, solution polymerized BRs having any of nitrogen, tin and silicon or a combination thereof at the molecular end obtained by using singly any of 4,4'-bis(dialkylamino)benzophenone, a halogenated tin compound, a lactam compound, an amide compound, a urea-based compound, an N,N-dialkylacrylamide compound, an isocyanate compound, an imide compound, a silane compound having an alkoxy group (trialkoxysilane compound and the like) and an aminosilane compound or by using two or more of the several different compounds such as a tin compound and a silane compound having an alkoxy group, and an alkylacrylamide compound and a silane compound having an alkoxy group and modifying the end thereof are also preferably used. These BRs can be preferably used as a composition for vibration-proof rubber, and usually used in a blend with natural rubber. As the blending proportion, it is preferable that the amount of natural rubber is 30 to 100 wt% and the amount of BR is 70 to 0 wt% with respect to the total rubber weight, further, it is particularly preferable that the amount of natural rubber is 40 to 70 wt% and the amount of BR is 60 to 30 wt% with respect to the total rubber weight. In this case, a blend of modified SBR and non-modified SBR and a blend of modified BR and non-modified BR are also preferable.

<Filler>

As the filler, exemplified are carbon black, silica, talc, clay, aluminum hydroxide and titanium oxide usually used in the field of rubber, and carbon black and silica are preferably used, and further, carbon black is particularly preferably used. The carbon black includes, for example, those described in "Rubber Industry Handbook <Fourth edition>" p. 494, edited by The Society of Rubber Science and Technology, Japan, and preferable are carbon blacks such as HAF (High Abrasion Furnace), SAF (Super Abrasion Furnace), ISAF (Intermediate SAF), ISAF-HM (Intermediate SAF-High Modulus), FEF (Fast Extrusion Furnace), MAF, GPF (General Purpose Furnace) and SRF (Semi-Reinforcing Furnace). For the composition for vibration-proof rubber, carbon blacks having a CTAB surface area of 5 to 250 $m^2/g$, a nitrogen adsorption specific surface area of 5 to 200 $m^2/g$ and a particle size of 10 to 100 nm are preferably used, carbon blacks having a CTAB surface area of 5 to 100 $m^2/g$ are further preferable, and examples thereof include N326, N330, N330T, N339, N343, N351, N539, N550, N630, N642, N650, N660, N754, N762, N765, N774, N907 and N990 according to the standard of ASTM. Also preferable are surface-treated carbon blacks prepared by adsorbing silica to the surface of carbon black in an amount of 0.1 to 50% by weight. Further, it is effective to combine several kinds of fillers such as a combination of carbon black and silica, and it is preferable that carbon black is used singly or both carbon black and silica are used. The use amount of a filler is preferably in the range of 5 to 100 parts by weight with respect to 100 parts by weight of a rubber component. It is particularly preferably in the range of 20 to 70 parts by weight, when only carbon black is used as a filler.

As the silica, silicas having a CTAB specific surface area of 50 to 180 $m^2$ /g and silicas having a nitrogen adsorption specific surface area of 50 to 300 $m^2/g$ are exemplified, and preferably used are commercially available products such as "AQ" and "AQ-N" manufactured by Tosoh Silica Corporation, "Ultrasil (registered trademark) VN3", "Ultrasil (registered trademark) VN3-G", "Ultrasil (registered trademark) 360" and "Ultrasil (registered trademark) 7000" manufactured by Degussa, "Zeosil (registered trademark) 115GR", "Zeosil (registered trademark) 1115MP", "Zeosil

(registered trademark) 1205MP" and "Zeosil (registered trademark) Z85MP" manufactured by Rhodia and "Nipsil (registered trademark) AQ" manufactured by Nippon Silica Industrial Co., Ltd.. It is also preferable to blend silicas having a pH of 6 to 8, silicas containing sodium in an amount of 0.2 to 1.5% by weight, spherical silicas having a roundness of 1 to 1.3, silicas surface-treated with a silicone oil such as dimethylsilicone oil, an organosilicon compound containing an ethoxysilyl group or an alcohol such as ethanol and polyethylene glycol, or silicas having two or more different nitrogen adsorption specific surface areas.

The use amount of a filler is preferably in the range of 10 to 120 parts by weight with respect to 100 parts by weight of a rubber component. When silica is blended, it is preferable to blend carbon black in an amount of 5 to 50 parts by weight, and the blending ratio of silica/carbon black is particularly preferably 0.7/1 to 1/0.1. When silica is usually used as the filler, it is preferable to add a compound having an element such as silicon or a functional group such as alkoxysilane capable of bonding to silica, such as one or more silane coupling agents selected from the group consisting of bis (3-triethoxysilylpropyl) tetrasulfide (manufactured by Degussa, "Si-69"), bis(3-triethoxysilylpropyl) disulfide (manufactured by Degussa, "Si-75"), bis(3-diethoxymethylsilylpropyl) tetrasulfide, bis(3-diethoxymethylsilylpropyl) disulfide, octanethioic acid S-[3-(triethoxysilyl)propyl] ester (manufactured by General Electronic Silicones, "NXT silane"), octanethioic acid S-[3-{(2-methyl-1,3-propanedialkoxy)ethoxysilyl}propyl] ester and octanethioic acid S-[3-{(2-methyl-1,3-propanedialkoxy)methylsilyl}propyl] ester phenyltriethoxysilane, methyltrimethoxysilane, methyltriethoxysilane, methyltriacetoxysilane, methyltributoxysilane, ethyltrimethoxysilane, ethyltriethoxysilane, isobutyltrimethoxysilane, isobutyltriethoxysilane, n-octyltrimethoxysilane, n-octyltriethoxysilane, vinyltrimethoxysilane, vinyltriethoxysilane, vinyltri(methoxyethoxy)silane, phenyltrimethoxysilane, phenyltriethoxysilane, phenyltriacetoxysilane, 3-methacryloxypropyltrimethoxysilane, 3-methacryloxypropyltriethoxysilane, 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, (3-glycidoxypropyl)trimethoxysilane, (3-glycidoxypropyl)triethoxysilane, 2-(3,4-epoxycyclohexyl)ethyltrimethoxysilane, 2-(3,4-epoxycyclohexyl)ethyltriethoxysilane, 3-isocyanate propyltrimethoxysilane and 3-isocyanate propyltriethoxysilane, and particularly preferable are bis(3-triethoxysilylpropyl) tetrasulfide (manufactured by Degussa, "Si-69"), bis(3-triethoxysilylpropyl) disulfide (manufactured by Degussa, "Si-75") and 3-octanoylthiopropyltriethoxysilane (manufactured by General Electronic Silicones, "NXT silane"). Regarding the addition period of these compounds, it is preferable to blend these compounds into rubber simultaneously with silica, and the blending amount is preferably 2 to 10% by weight, further preferably 7 to 9% by weight with respect to silica. The blending temperature in blending is preferably in the range of 80 to 200°C, further preferably 110 to 180°C. Further, when silica is used as the filler, it is also preferable to blend a mono-hydric alcohol such as ethanol, butanol and octanol, a di- or more-hydric alcohol such as ethylene glycol, diethylene glycol, triethylene glycol, polyethylene glycol, polypropylene glycol, pentaerythritol and polyether polyol, an N-alkylamine, an amino acid, and a liquid polybutadiene having a carboxyl-modified or amine-modified molecular end, in addition to silica and a compound having an element such as silicon or a functional group such as alkoxysilane capable of bonding to silica.

As the aluminum hydroxide, exemplified are aluminum hydroxides having a nitrogen adsorption specific surface area of 5 to 250$m^2$/g and a DOP oiling quantity of 50 to 100 ml/100 g.

<Compound represented by formula (I) (hereinafter, referred to as "compound (I)" in some cases) or a salt thereof>

The compound (I) can be produced, for example, by reacting a mono-haloalkylamine hydrochloride and a metal salt or ammonium salt of thiosulfuric acid. The compound (I) may also be obtained by neutralizing a salt of a compound (I) with a protonic acid such as hydrochloric acid and sulfuric acid. The salt of a compound (I) can be produced by methods such as a method of reacting a mono-haloalkylamine and a metal salt or ammonium salt of thiosulfuric acid and a method of reacting a phthalimide potassium salt and a dihaloalkane, and then reacting the resultant compound with a metal salt or ammonium salt of thiosulfuric acid.

Specific examples of the compound (I) include 2-aminoethylthiosulfuric acid, 3-aminopropylthiosulfuric acid, 4-aminobutylthiosulfuric acid, 5-aminopentylthiosulfuric acid, 6-aminohexylthiosulfuric acid, 7-aminoheptylthiosulfuric acid, 8-aminooctylthiosulfuric acid, 9-aminononylthiosulfuric acid, 10-aminodecylthiosulfuric acid, 11-aminoundecylthiosulfuric acid and 12-aminododecylthiosulfuric acid, preferable are 3-aminopropylthiosulfuric acid and 6-aminohexylthiosulfuric acid, further preferable is 3-aminopropylthiosulfuric acid.

The salt of a compound (I) is, for example, a salt represented by formula (II):

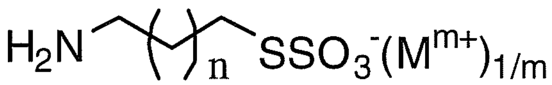

(II)

in formula (II), n represents an integer of 0 to 10,
m represents 1 or 2, and
$M^{m+}$ represents $Li^+$, $Na^+$, $K^+$, $NH_4^+$, $Ca^{2+}$ or $Ba^{2+}$.

The salt of a compound (I) includes metal salts and ammonium salts of a compound (I).
The compound (I) or a salt thereof can be isolated in the form solid by an operation such as concentration and crystallization. The isolated compound (I) or a salt thereof contains water in an amount of about 0.1% to 5% in some cases.
The use amount of the compound (I) or a salt thereof is preferably 0.1 to 10 parts by weight, more preferably 0.3 to 3 parts by weight with respect to 100 parts by weight of a rubber component.
It is also possible to previously blend the compound (I) or a salt thereof with a carrier. Such a carrier includes fillers exemplified above and "inorganic fillers and reinforcing agents" described in "Rubber Industry Handbook <fourth edition>", pp. 510 to 513 edited by The Society of Rubber Science and Technology, Japan. Carbon black, silica, calcined clay and aluminum hydroxide are preferable. The use amount of a carrier is preferably in the range of 10 to 1000 parts by weight with respect to 100 parts by weight of the compound (I) or a salt thereof.

<Stearic acid>

The use amount of stearic acid is preferably 0.5 to 5 parts by weight, more preferably 0.5 to 3 parts by weight with respect to 100 parts by weight of a rubber component.

<Zinc oxide>

The use amount of zinc oxide is preferably 0.5 to 10 parts by weight, more preferably 2 to 7 parts by weight with respect to 100 parts by weight of a rubber component.

<Second step>

In the second step, the kneaded mixture obtained in the first step, a sulfur component and a vulcanization accelerator are kneaded.
The second step is carried out preferably at 30 to 100°C, more preferably at 50 to 90°C.
The second step is carried out preferably for 1 to 10 minutes, more preferably for 2 to 8 minutes.

<Sulfur component>

The sulfur component includes powdered sulfur, precipitated sulfur, colloidal sulfur, insoluble sulfur and highly-dispersible sulfur. Usually, powdered sulfur is preferable.
The use amount of the sulfur component is preferably 0.1 to 10 parts by weight, more preferably 0.3 to 3 parts by weight with respect to 100 parts by weight of a rubber component.

<Vulcanization accelerator>

The vulcanization accelerator includes thiazole vulcanization accelerators, sulfenamide vulcanization accelerators and guanidine vulcanization accelerators described in Rubber Industry Handbook <Fourth edition> pp. 412 to 413 (published by The Society of Rubber Science and Technology, Japan on January 20-th, 1994).
The vulcanization accelerator includes N-cyclohexyl-2-benzothiazolyl sulfenamide (CBS), N-tert-butyl-2-benzothiazolyl sulfonamide (BBS), N,N-dicyclohexyl-2-benzothiazolyl sulfenamide (DCBS), 2-mercaptobenzothiazole (MBT), dibenzothiazyl disulfide (MBTS) and diphenylguanidine (DPG). In the case of use of carbon black as the filler, it is preferable to use N-cyclohexyl-2-benzothiazolyl sulfenamide (CBS), N-tert-butyl-2-benzothiazolyl sulfonamide (BBS), N,N-dicyclohexyl-2-benzothiazolyl sulfenamide (DCBS) or dibenzothiazyl disulfide (MBTS) and diphenylguanidine (DPG) together. When silica and carbon black are used together as the filler, it is preferable to use any of N-cyclohexyl-2-benzothiazolyl sulfenamide (CBS), N-tert-butyl-2-benzothiazolyl sulfenamide(BBS), N,N-dicyclohexyl-2-benzothiazolyl sulfenamide (DCBS) and dibenzothiazyl disulfide (MBTS), and diphenylguanidine (DPG) together.
Regarding the ratio of sulfur to a vulcanization accelerator, the sulfur/vulcanization accelerator ratio is preferably in the range of 2/1 to 1/2 by weight. EV vulcanization in which the sulfur/vulcanization accelerator ratio is controlled to 1 or less as a method of improving the heat resistance of a rubber member composed mainly of natural rubber is preferably used.
It is also possible to blend and knead agents improving the viscoelastic property usually used in the field of rubber, in the first step and/or second step. The agents improving the viscoelastic property include N,N'-bis(2-methyl-2-nitropropyl)-1,6-hexanediamine (manufactured by Sumitomo Chemical Co., Ltd., "Sumifine (registered trademark) 1162"), dithiouracil compounds described in JP-A No. 63-23942, nitrosoquinoline compounds such as 5-nitroso-8-hydroxyquinoline (NQ-58) described in JP-A No. 60-82406, alkylphenol/sulfur chloride condensates described in JP-A No. 2009-138148 such as "Tackirol (registered trademark) AP, V-200" manufactured by Taoka Chemical Co., Ltd. and

"Vultac 2, 3, 4, 5, 7, 710" manufactured by Pennwalt Corp., bis(3-triethoxysilylpropyl) tetrasulfide (manufactured by Degussa, "Si-69"), bis(3-triethoxysilylpropyl) disulfide (manufactured by Degussa, "Si-75"), bis(3-diethoxymethylsilylpropyl) tetrasulfide, bis(3-diethoxymethylsilylpropyl) disulfide, octanethioic acid S-[3-(triethoxysilyl)propyl] ester, octanethioic acid S-[3-{(2-methyl-1,3-propanedialkoxy)ethoxysilyl}propyl] ester, and silane coupling agents such as octanethioic acid S-[3-{(2-methyl-1,3-propanedialkoxy)methylsilyl}propyl] ester phenyltriethoxysilane, methyltrimethoxysilane, methyltriethoxysilane, methyltriacetoxysilane, methyltributoxysilane, ethyltrimethoxysilane, ethyltriethoxysilane, isobutyltrimethoxysilane, isobutyltriethoxysilane, n-octyltrimethoxysilane, n-octyltriethoxysilane, vinyltrimethoxysilane, vinyltriethoxysilane, vinyltri(methoxyethoxy)silane, phenyltrimethoxysilane, phenyltriethoxysilane, phenyltriacetoxysilane, 3-methacryloxypropyltrimethoxysilane, 3-methacryloxypropyltriethoxysilane, 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, (3-glycidoxypropyl)trimethoxysilane, (3-glycidoxypropyl)triethoxysilane, 2-(3,4-epoxycyclohexyl)ethyltrimethoxysilane, 2-(3,4-epoxycyclohexyl)ethyltriethoxysilane, 3-isocyanate propyltrimethoxysilane and 3-isocyanate propyltriethoxysilane, 1,6-bis(N,N'-dibenzylthiocarbamoyldithio)hexane (manufactured by Beyer, "KA9188"), 1,6-hexamethylene dithiosulfate disodium salt dihydrate, 1,3-bis(citraconimidemethyl)benzene (manufactured by Flexsys, "Perkalink 900"), 1-benzoyl-2-phenylhydrazide, carboxylic acid hydrazide derivatives such as 1- or 3-hydroxy-N'-(1-methylethylidene)-2-naphthoic acid hydrazide, and 1- or 3-hydroxy-N'-(1-methylpropylidene)-2-naphthoic acid hydrazide, 1- or 3-hydroxy-N'-(1,3-dimethylbutylidene)-2-naphthoic acid hydrazide and 1- or 3-hydroxy-N'-(2-furylmethylene)-2-naphthoic acid hydrazide described in JP-A No. 2004-91505, 3-hydroxy-N'-(1,3-dimethylbutylidene)-2-naphthoic acid hydrazide, 3-hydroxy-N'-(1,3-diphenylethylidene)-2-naphthoic acid hydrazide and 3-hydroxy-N'-(1-methylethylidene)-2-naphthoic acid hydrazide described in JP-A No. 2000-190704, bismercapto-oxadiazole compounds described in JP-A No. 2006-328310, pyrithione salt compounds described in JP-A No. 2009-40898, and cobalt hydroxide compounds described in JP-A No. 2006-249361.

Of them, preferable are N,N'-bis(2-methyl-2-nitropropyl)-1,6-hexanediamine (manufactured by Sumitomo Chemical Co., Ltd., "Sumifine (registered trademark) 1162"), 5-nitroso-8-hydroxyquinoline (NQ-58), bis(3-triethoxysilylpropyl) tetrasulfide (manufactured by Degussa, "Si-69"), bis(3-triethoxysilylpropyl) disulfide (manufactured by Degussa, "Si-75"), 1,6-bis(N,N'-dibenzylthiocarbamoyldithio)-hexane (manufactured by Beyer, "KA9188"), hexamethylene bisthiosulfate disodium salt dihydrate, 1,3-bis(citraconimidemethyl)benzene (manufactured by Flexsys, "Perkalink 900"), and alkylphenol/sulfur chloride condensates such as "Tackirol (registered trademark) AP, V-200" manufactured by Taoka Chemical Co., Ltd..

It is also possible to blend and knead compounding agents usually used in the field of rubber, in the first step and/or second step. Such compounding agents include antioxidants such as "Antigen (registered trademark) 6C" manufactured by Sumitomo Chemical Co. , Ltd. ; oils; fatty acids such as stearic acid; coumarone/indene resins such as a coumarone resin NG4 (softening point: 81 to 100°C) manufactured by Nippon Steel Chemical Co., Ltd. and Process Resin AC5 (softening point: 75°C) manufactured by Kobe Oil Chemical Industrial Co., Ltd.; terpene type resins such as terpene resins, terpene/phenol resins and aromatic modified terpene resins; rosin derivatives such as "Nikanol (registered trademark) A70" (softening point: 70 to 90°C) manufactured by Mitsubishi Gas Chemical Company, Inc.; hydrogenated rosin derivatives; novolac type alkylphenol resins; resol type alkylphenol resins; C5 type petroleum resins; and liquid polybutadiene.

The oil includes process oils and vegetable fats and oils. The process oil includes paraffinic process oils, naphthenic process oils and aromatic process oils, for example, an aromatic oil (manufactured by COSMO OIL Co. , Ltd. , "NC-140") and a process oil (manufactured by Idemitsu Kosan Co., Ltd., "Diana Process PS32").

The antioxidant includes, for example, those described in "Rubber Industry Handbook <Fourth edition>", pp. 436 to 443 edited by The Society of Rubber Science and Technology, Japan. Of them, N-phenyl-N'-13-dimethylbutyl-p-phenylenediamine (6PPD), a reaction product of aniline and acetone (TMDQ), poly(2,2,4-trimethyl-1,2-)dihydroquinoline) (manufactured by Matsubara Sangyo, "Antioxidant FR"), synthetic waxes (paraffin waxes and the like) and vegetable waxes are preferably used.

The wax includes "Sannoc (registered trademark) wax" manufactured by Ouchi Shinko Chemical Industrial Co. , Ltd. and "OZOACE-0355" manufactured by Nippon Seiro Co., Ltd..

It is also possible to blend and knead vulcanizing agents such as morpholine disulfide usually used in the field of rubber, in the first step and/or second step.

Further, in the first step and/or second step, a peptizer and a retarder may be blended and kneaded, furthermore, general various rubber chemicals and softening agents may be blended and kneaded if necessary.

As the retarder, exemplified are phthalic anhydride, benzoic acid, salicylic acid, N-nitrosodiphenylamine, N-(cyclohexylthio)-phthalimide (CTP), sulfonamide derivatives and diphenylurea, bis(tridecyl)pentaerythritol-diphosphite, and N-(cyclohexylthio)-phthalimide (CTP) is preferably used.

The use amount of the retarder is preferably in the rage of 0.01 to 1 part by weight, particularly preferably in the range of 0.05 to 0.5 parts by weight with respect to 100 parts by weight of a rubber component.

<Third step>

In the third step, the kneaded mixture obtained in the second step is thermally treated.

The temperature in thermal treatment is preferably 120 to 180°C. Thermal treatment is usually carried out under normal pressure or positive pressure.

For example, the 90% vulcanization time ($t_c(90)$) of the kneaded mixture obtained in the second step is measured according to JIS K 6300-2, and a time which is longer than this by 5 to 10 minutes is preferably set as the time of treatment of the third step.

It is preferable that the method of the present invention comprises a step of processing the kneaded mixture obtained in the second step into a specific shape, before subjecting the kneaded mixture obtained in the second step to the third step.

Vulcanized rubber having dynamic-to-static modulus ratio lowered by the method of the present invention can be used in various vibration-proof rubber applications. Vibration-proof rubber includes, for example, automobile vibration-proof rubbers for an engine mount, a strut mount, a bush and an exhaust hanger. The vibration-proof rubber is usually obtained by processing the kneaded mixture obtained in the second step into the shape of the vibration-proof rubber, then, subjecting this to thermal treatment of the third step.

[EXAMPLES]

The present invention will be explained specifically by examples listed below.

Production Example 1: S-(3-aminopropyl)thiosulfuric acid

Into a nitrogen-purged reaction vessel were charged 100 g (0.77 mol) of 3-chloropropylamine hydrochloride, 180 mL of water and 200.4 g (0.81 mol) of sodium thiosulfate pentahydrate, and the resultant mixture was stirred for 5 hours at a bath temperature of 70 to 80°C. The reaction mixture was allowed to cool overnight, the crystal was isolated by filtration, and then, washed with water and methanol. The resultant crystal was dried at 50°C for 4 hours, to obtain S-(3-aminopropyl)thiosulfuric acid. The amount of the resultant crystal was 97.8 g.
$^1$H-NMR (270.05 MHz, $D_2O$ $\delta_{ppm}$: 3.0-3.1 (4H,m), 2.0-2.1 (2H,m)

The median diameter (50% D) of the resultant S-(3-aminopropyl)thiosulfuric acid was measured by a laser diffraction method using type SALD-2000J manufactured by Shimadzu Corp., to find a value of 185 μm. The resultant S-(3-aminopropyl)thiosulfuric acid was pulverized, to prepare S-(3-aminopropyl)thiosulfuric acid having a median diameter (50% D) of 29.2 μm. The S-(3-aminopropyl)thiosulfuric acid having a median diameter (50% D) of 29.2 μm was used in Example 1.

<Measurement operation>

The resultant S-(3-aminopropyl)thiosulfuric acid was dispersed at room temperature in a mixed solution composed of a dispersing solvent (toluene) and a dispersing agent (10 wt% sodium di-2-ethylhexyl sulfosuccinate/toluene solution), and the resultant dispersion was stirred for 5 minutes while irradiating the dispersion with an ultrasonic wave, to obtain a test solution. The test solution was transferred to a batch cell, and subjected to measurement after one minute (refractive index: 1.70-0.20 i).

Example 1

<First step>

Using a Banbury mixer (manufactured by Toyo Seiki Seisakusho Co., Ltd., 600 ml Laboplastomill), 100 parts by weight of natural rubber (RSS#1), 45 parts by weight of HAF (manufactured by Asahi Carbon Co., Ltd., trade name "Asahi #70"), 3 parts by weight of stearic acid, 5 parts by weight of zinc oxide, 1 part by weight of an antioxidant (N-phenyl-N'-1,3-dimethylbutyl-p-phenylenediamine (6PPD): trade name "Antigen (registered trademark) 6C", manufactured by Sumitomo Chemical Co., Ltd.) and 0.5 parts by weight of S-(3-aminopropyl)thiosulfuric acid obtained in Production Example 1 were kneaded, to obtain a kneaded mixture. In this step, various chemicals and fillers were charged, then, kneaded for 5 minutes at a mixer set temperature of 120° C and a mixer rotating speed of 50 rpm. The temperature of the kneaded mixture in completion of kneading was 163°C.

<Second step>

In an open roll mill having a roll temperature set at 60°C, the kneaded mixture obtained in the first step, 1 part by weight of a vulcanization accelerator N-cyclohexyl-2-benzothiazolesulfenamide (CBS) and 2 parts by weight of sulfur were blended by kneading, to obtain an unvulcanized rubber composition.

<Third step>

The unvulcanized rubber composition obtained in the second step was thermally treated at 145°C, to obtain a vulcanized rubber composition.

Reference Example 1

An unvulcanized rubber composition and a vulcanized rubber composition were obtained in the same manner as in Example 1, excepting that S-(3-aminopropyl)thiosulfuric acid was not used in Example 1. The temperature of the kneaded mixture after completion of kneading in the first step was 160°C.

Test Example 1

The dynamic viscoelastic property of the vulcanized rubber composition obtained in the third step of Example 1 was measured, and the dynamic-to-static modulus ratio was calculated as described below.

(1) Dynamic viscoelastic property

The dynamic viscoelastic property was measured using a viscoelasticity measuring apparatus RSA-3 manufactured by TA INSTRUMENTS.

Condition; temperature: -40 to 80°C, dynamic strain: 0.1%, frequency: 1 to 10 Hz

(2) Dynamic-to-static modulus ratio

Based on the results obtained in (1), frequency dependency at a reference temperature of 23°C (master curve) was determined, and the complex modulus when the frequency was 1 Hz was defined as the static modulus and the complex modulus when the frequency was 100 Hz was defined as the dynamic modulus, and calculation thereof was effected according to formula (1).

$$\text{Dynamic-to-static modulus ratio} = \text{dynamic modulus (Pa)} / \text{static modulus (Pa)} \quad \text{formula (1)}$$

Based on the vulcanized rubber composition obtained in Reference Example 1 as a control, the dynamic-to-static modulus ratio of the vulcanized rubber composition obtained in the third step of Example 1 decreased by 6%, thus, an improvement in the dynamic-to-static modulus ratio was confirmed.

Example 2

<First step>

Using a Banbury mixer (manufactured by Toyo Seiki Seisakusho Co., Ltd., 600 ml Laboplastomill), 80 parts by weight of natural rubber (RSS#1), 20 parts by weight of polybutadiene rubber (manufactured by JSR, trade name "BR01"), 40 parts by weight of FEF (manufactured by Asahi Carbon Co., Ltd., trade name "Asahi #60"), 40 parts by weight of heavy calcium carbonate, 3 parts by weight of stearic acid, 5 parts by weight of zinc oxide, 1 part by weight of an antioxidant (N-phenyl-N’-1,3-dimethylbutyl-p-phenylenediamine (6PPD): trade name "Antigen (registered trademark) 6C", manufactured by Sumitomo Chemical Co., Ltd.), 1 part by weight of an antioxidant Polymerized-2.2.4-trimethy-1.2-dihydroquinoline (TMDQ) and 2.0 parts by weight of S-(3-aminopropyl)thiosulfuric acid obtained in Production Example 1 were kneaded to obtain a kneaded mixture. In this step, various chemicals and fillers were charged, then, kneaded at a mixer set temperature of 120°C and a mixer rotating speed of 50 rpm for 5 minutes. The temperature of the kneaded mixture when kneading was completed was 154°C. In the same manner as in Example 1, unvulcanized rubber was

obtained via the second step and a vulcanized rubber composition was obtained via the third step.

Reference Example 2

An unvulcanized rubber composition and a vulcanized rubber composition were obtained in the same manner as in Example 2, excepting that S-(3-aminopropyl)thiosulfuric acid was not used in Example 2. The temperature of the kneaded mixture after completion of kneading in the first step was 152°C.

Test Example 2

Measurement was performed in the same manner as in Test Example 1. Based on the vulcanized rubber composition obtained in Reference Example 2 as a control, the dynamic-to-static modulus ratio of the vulcanized rubber composition obtained in the third step of Example 2 decreased by 5%, thus, an improvement in the dynamic-to-static modulus ratio was confirmed.

Example 3

<First step>

Using a Banbury mixer (manufactured by Toyo Seiki Seisakusho Co., Ltd., 600 ml Laboplastomill), 100 parts by weight of ethylene/propylene/diene copolymerized rubber (manufactured by Sumitomo Chemical Co., Ltd., trade name "Esprene 505A"), 45 parts by weight of HAF (manufactured by Asahi Carbon Co., Ltd., trade name "Asahi #70"), 3 parts by weight of stearic acid, 5 parts by weight of zinc oxide, 1 part by weight of an antioxidant (N-phenyl-N'-1,3-dimethylbutyl-p-phenylenediamine (6PPD): trade name "Antigen (registered trademark) 6C", manufactured by Sumitomo Chemical Co., Ltd.) and 0.5 parts by weight of S-(3-aminopropyl)thiosulfuric acid obtained in Production Example 1 were kneaded to obtain a kneaded mixture. In this step, various chemicals and fillers were charged, then, kneaded at a mixer set temperature of 120°C and a mixer rotating speed of 50 rpm for 5 minutes. The temperature of the kneaded mixture when kneading was completed was 152°C

<Second step>

In an open roll mill having a roll temperature set at 60°C, the kneaded mixture obtained in the first step, 1 part by weight of a vulcanization accelerator N-cyclohexyl-2-benzothiazolesulfenamide (CBS) and 2 parts by weight of sulfur were blended by kneading, to obtain an unvulcanized rubber composition.

<Third step>

The unvulcanized rubber composition obtained in the second step was thermally treated at 145°C, to obtain a vulcanized rubber composition.

Reference Example 3

An unvulcanized rubber composition and a vulcanized rubber composition were obtained in the same manner as in Example 3, excepting that S-(3-aminopropyl)thiosulfuric acid was not used in Example 3. The temperature of the kneaded mixture after completion of kneading in the first step was 152°C.

Test Example 3

Measurement was performed in the same manner as in Test Example 1. Based on the vulcanized rubber composition obtained in Reference Example 3 as a control, the dynamic-to-static modulus ratio of the vulcanized rubber composition obtained in the third step of Example 3 decreased by 8%, thus, an improvement in the dynamic-to-static modulus ratio was confirmed.

Industrial Applicability

According to the method for lowering the dynamic-to-static modulus ratio of vulcanized rubber of the present invention, the dynamic-to-static modulus ratio of the resultant vulcanized rubber can be lowered.

**Claims**

**1.** A method for lowering the dynamic-to-static modulus ratio of vulcanized rubber, the method comprising
a first step of kneading a rubber component, a filler and a compound represented by formula (I) or a salt thereof,
a second step of kneading the kneaded mixture obtained in the first step, a sulfur component and a vulcanization accelerator, and
a third step of thermally treating the kneaded mixture obtained in the second step:

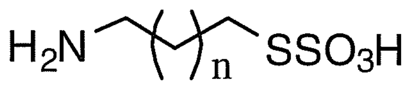 (I)

in formula (I), n represents an integer of 0 to 10.

**INTERNATIONAL SEARCH REPORT**

International application No.
PCT/JP2012/069525

A. CLASSIFICATION OF SUBJECT MATTER
*C08J3/24*(2006.01)i, *F16F1/36*(2006.01)i, *F16F15/08*(2006.01)i

According to International Patent Classification (IPC) or to both national classification and IPC

B. FIELDS SEARCHED

Minimum documentation searched (classification system followed by classification symbols)
C08J3/00-3/28, F16F15/00-15/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | WO 2010/140704 A1 (Sumitomo Chemical Co., Ltd.), 09 December 2010 (09.12.2010), claims; examples & EP 2439237 A1 & JP 2011-202137 A | 1 |
| A | JP 60-199643 A (Monsanto Europe, S.A.), 09 October 1985 (09.10.1985), claims; examples & US 4581297 A & EP 150168 A2 | 1 |
| A | JP 58-017132 A (Monsanto Europe, S.A.), 01 February 1983 (01.02.1983), claims; examples & US 4417012 A & EP 0070143 A1 | 1 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 October, 2012 (19.10.12) | 30 October, 2012 (30.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/069525

C (Continuation). DOCUMENTS CONSIDERED TO BE RELEVANT

| Category* | Citation of document, with indication, where appropriate, of the relevant passages | Relevant to claim No. |
|---|---|---|
| A | JP 59-091140 A (Monsanto Europe, S.A.), 25 May 1984 (25.05.1984), claims; examples & US 4532080 A & EP 109955 A2 | 1 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 63023942 A
- JP 60082406 A
- JP 2009138148 A
- JP 2004091505 A
- JP 2000190704 A
- JP 2006328310 A
- JP 2009040898 A
- JP 2006249361 A

### Non-patent literature cited in the description

- Rubber Industry Handbook. 848
- Rubber Industry Handbook. 210-211
- Rubber Industry Handbook. 510-513
- Rubber Industry Handbook. The Society of Rubber Science and Technology, 20 January 1994, 412-413
- Rubber Industry Handbook. 436-443